# EUROPÄISCHE PATENTSCHRIFT

(11) **EP 1 847 783 B1**
(45) Veröffentlichungstag und Bekanntmachung des Hinweises auf die Patenterteilung: **01.03.2017**
(21) Anmeldenummer: 07007750.8
(22) Anmeldetag: 17.04.2007
(51) Int. Cl.: F24D 17/02, F24F 5/00, F24F 12/00

(54) **Wärmepumpenvorrichtung**
Heat pump device
Dispositif de pompes à chaleur

(30) Priorität: 21.04.2006 DE 102006019175
(43) Veröffentlichungstag der Anmeldung: 24.10.2007
(73) Patentinhaber: Stiebel Eltron GmbH & Co. KG, 37603 Holzminden (DE)
(72) Erfinder: Nolte, Hubert, 37671 Höxter (DE); Schiefelbein, Kai, Dr., 37671 Höxter (DE)

(56) Entgegenhaltungen:
- EP-A1- 0 908 687
- WO-A1-81/00616
- WO-A1-84/02386
- DE-C1- 19 836 891
- DE-U1- 9 318 764
- DE-U1-202004 008 792

## Beschreibung

Die vorliegende Erfindung betrifft eine Wärmepumpenvorrichtung für Brauchwasser.

Brauchwasserwärmepumpen verwenden typischerweise die Umgebungsluft als Energiequelle und übertragen die Nutzwärme unter Verwendung eines Wärmetauschers und eines Verflüssigers auf ein Heizungsmedium, welches wiederum die Wärme auf einen Brauchwasserinhalt in einem Speicher überträgt.

Aus DE 81 03 504 U1 ist eine Wärmepumpe, insbesondere zum Erwärmen von Brauchwasser durch Wärmeentzug aus der Luft, bekannt. Der Verdampfer und der Ventilator nehmen die volle Breite des Gehäuses ein und sind oberhalb einer im Gehäuse sitzenden Trennwand angeordnet. Die Trennwand liegt an den Seitenwänden des Gehäuses an, wobei sich vom Rand einer in der Decke des Gehäuses angeordneten Ansaugöffnung bis zum unteren Rand einer in der Schmalseite des Gehäuses angeordneten Ausblasöffnung erstreckt

Eine Brauchwasserwärmepumpe weist typischerweise einen Wärmetauscher, einen Verdampfer, einen Kompressor, einen Hochdruckwächter, einen Vertlüssiger sowie ein thermisches Expansionsventil auf, In dem Wärmetauscher, welcher als ein gewendeltes Kupferrohr ausgestaltet sein kann, wird das Kältemittel enthitzt und kondensiert. Die Wärme des Kältemittels wird somit direkt auf das Brauchwasser übertragen, da sich der Verflüssiger im Warmwasserspeicher befindet. Ein Lüfter transportiert die zu enthitzende und zu entfeuchtende Luft durch den Verdampfer. Das Brauchwasser wird in einem vorzugsweise emaillierten Stahlbehälter gespeichert, wobei die sich in dem Kältemittel befindliche Wärme auf das Brauchwasser übertragen wird.

Während eines Zapfvorganges wird warmes Wasser aus dem Speicher gezapft und kaltes Wasser fließt in den Speicher nach. Entsprechend der Leistung der Wärmepumpe kann relativ viel Zeit benötigt werden, um das nachfließende kalte Wasser wieder auf ein nutzbares Temperatumiveau zu bringen.

Derartige Brauchwasserwärmepumpen weisen jedoch oftmals zu großen Dimensionen auf.

Eine Wärmepumpenvorrichtung gemäß der Präambel des Anspruchs 1 ist aus dem Dokument DE 198 36 891 C1 bekannt

Es ist somit Aufgabe der vorliegenden Erfindung, eine Wärmepumpenvorrichtung vorzusehen, welche platzsparend aufgebaut werden kann.

Diese Aufgabe wird durch eine Wärmepumpenvorrichtung gemäß Anspruch 1 gelöst.

Somit wird eine Wärmepumpenvorrichtung vorgesehen, welche eine Lüftungswärmepumpe mit einem Abluftstutzen und einem Fortluftstutzen aufweist. Die Wärmepumpenvorrichtung weist ferner eine Luftvertailungseinheit auf, welche an der Lüftungswärmepumpe lösbar befestigt werden kann. Die Abluft wird durch die Luftverteilungseinheit in den Abluftstutzen der Lüftungswärmepumpe geleitet, und die Fortluft von dem Fortluftstutzen der Lüftungswärmepumpe wird durch ein Fortluftrohr in der Luftverteilungseinheit nach außen geführt. Mit einer separaten Luftverteilungseinheit kann die Lüftungswärmepumpe an eine Vielzahl von Einbausituationen angepasst werden, ohne dass aufwändige Abluftrohre benötigt werden.

Weitere Ausgestaltungen der Erfindung sind Gegenstand der Unteransprüche.

Die Ausführungsbeispiele und Vorteile der Erfindung werden nachstehend unter Bezugnahme auf die beigefügte Zeichnung näher erläutert.
- Fig. 1: zeigt eine schematische Darstellung einer Wärmepumpe gemäß einem ersten Ausführungsbeispiel,
- Fig. 2: zeigt eine schematische Darstellung eines Installationsbeispiels der Wärmepumpe von Fig. 1 gemäß einem zweiten Ausführungsbeispiel,
- Fig. 3: zeigt einen Ausschnitt A von Fig. 2,
- Fig. 4: zeigt einen Schnitt I - I aus Fig. 3,
- Fig. 5: zeigt eine Frontansicht einer Wärmepumpenvorrichtung, und
- Fig. 6: zeigt eine schematische Darstellung eines Installationsbeispiels gemäß einem weiteren Ausführungsbeispiel.

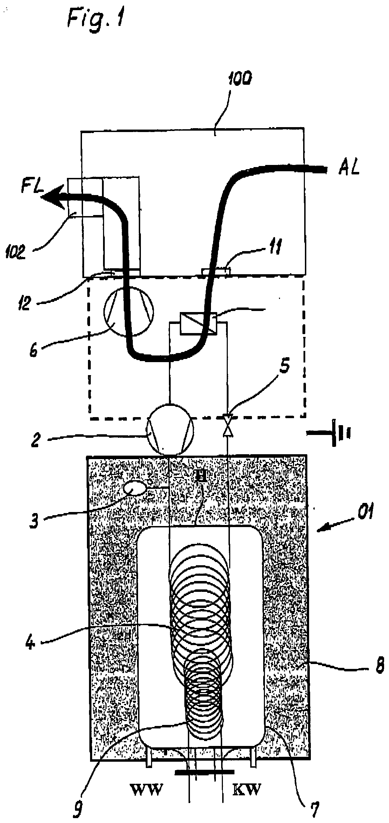

Fig. 1 zeigt eine schematische Darstellung der Wärmepumpe gemäß einem ersten Ausführungsbeispiel. Die Wärmepumpe weist einen Speicher 7 zum Speichem von Brauchwasser auf. Im Wärmeaustauscher 4, der als gewendeltes Kupferrohr ausgeführt sein kann, wird das Kältemittel enthitzt und kondensiert. Dabei überträgt es seine Wärme auf das Brauchwasser in dem Speicher 7. Der Kältekreis besteht aus dem Verdampfer 1, dem Kompressor 2, dem Hochdruckwächter 3, dem Verflüssiger 4 und dem thermischen Expansionsvenfil 5. Der Lüfter 6 saugt die zu enthitzende und zu entfeuchtende Luft über den im Abluftstutzen 11 integrierten Luftfilter durch den Verdampfer 1. Die Fortluft FL verlässt die Wärmepumpe Ober den Fortluftstutzen 12. Das Brauchwasser wird in einem emaillierten Stahlbehälter 7 gespeichert, Der Speicher ist mit einem wärmedämmenden Material z. B. PUR Schaum 8 zusammen mit dem Verflüssiger 4 eingeschäumt.

Ein zusätzlicher Wärmeübertrager 9 kann vorgesehen werden, um die Wärmepumpe bei der Brauchwasserbereitung zu unterstützen, damit bei erhöhtem Brauchwasserbedarf die Verfügbarkeit von warmem Wasser schnell gewährleistet ist Die Zusatzheizung kann per Tastendruck für einen einmaligen Aufheizvorgang aktivierbar sein,

In einer besonderen Ausführung kann der zusätzliche Wärmeüberträger ein elektrisch direkt heizendes Element und die Abluftwärmepumpe an der Wand aufgehängt sein.

Wenn die Abluft aus Feuchträumen wie z. B. Bädern abgesaugt wird, ist eine besonders vorteilhafte wirtschaftliche Betriebsweise der Wärmepumpe möglich, weil die sehr feuchte und warme Luft sehr viel Energie enthält. Außerdem wird die Bausubstanz durch die entfeuchtende Wirkung der Wärmepumpe geschütz was bei im Geschosswohnungsbau üblichen fensterlosen Feuchträumen wichtig ist. Eine kostensparende Installation ist ferner dann gegeben, wenn die Wärmepumpe direkt im Feuchtraum installiert ist und keine Rohre für die Luftführung der Abluft AL benötigt werden. Das ist ebenfalls aus Kostengründen für die Altbausanierung ein wichtiger Punkt. Im Geschosswohnungsbau ist es vorteilhaft, wenn die Lüftungswärmepumpe an einen gemeinsamen Fortluftschacht 13 angeschlossen werden kann. Dazu muss der Fortluftstutzen 12 mit einer Rückschlagklappe ausgestattet sein.

An der Wärmepumpe wird ein Abluftverteiler 100 befestigt. Die Abluft AL wird angesaugt und strömt durch den Abluftstutzen 11 durch die Abluftwärmepumpe 01 und aus dem Fortluftstutzen 12 Ober ein Fortluftrohr 102 nach draußen. Dieser Abluftverteiler kann als ein Kasten ausgestaltet sein, welcher auf der Abluftpumpe befestigt werden kann.

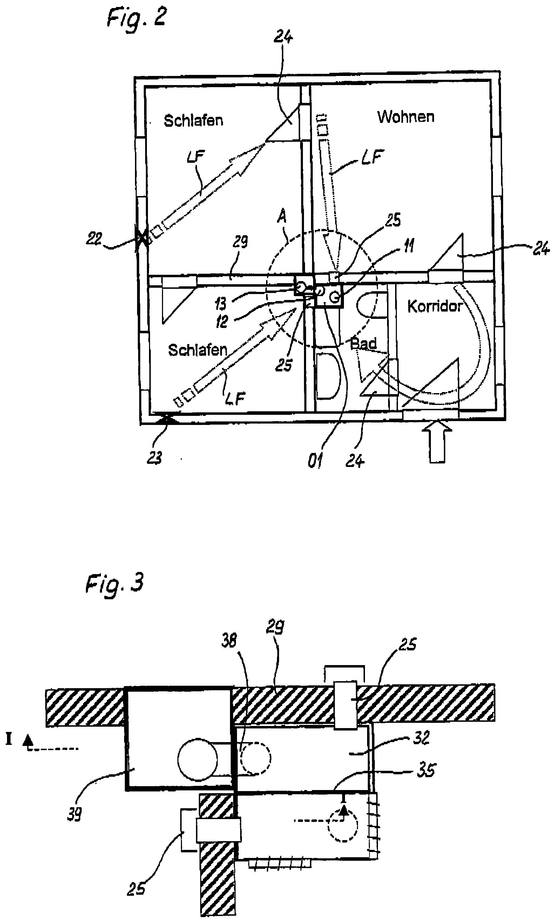

Fig. 2 zeigt eine schematische Darstellung eins Installationsbeispieles einer Wärmepumpe gemäß Fig, 1. Hierbei wird die Brauchwasserwärmepumpe gemäß Fig. 1 in einer Geschossbauwohnung eingesetzt.

Die Abluftwärmepumpe 01 saugt die Abluft über einstellbare Abluftventile 22, 23, welche in den Wänden angeordnet sein können, in das Gebäude. In den Zimmertüren 24 sind nicht näher dargestellte Gitter für die Belüftung vorgesehen. Diese Gitter können denen entsprechen, wie sie im Geschossswohnungsbau für Gasetagenheizungen verwendet werden. Die Luftführung LF wird beispielhaft durch die gepunkteten Pfeile dargestellt.

Somit wird die Luftführung sowohl über die Türgitter 24 als auch über zwei Wandöffnungen 25 geführt. Der Öffnungsquerschnitt der Wandöffnung 25 kann einstellbar sein.

Fig. 3 zeigt den Abschnitt A von Fig. 2 vergrößert.

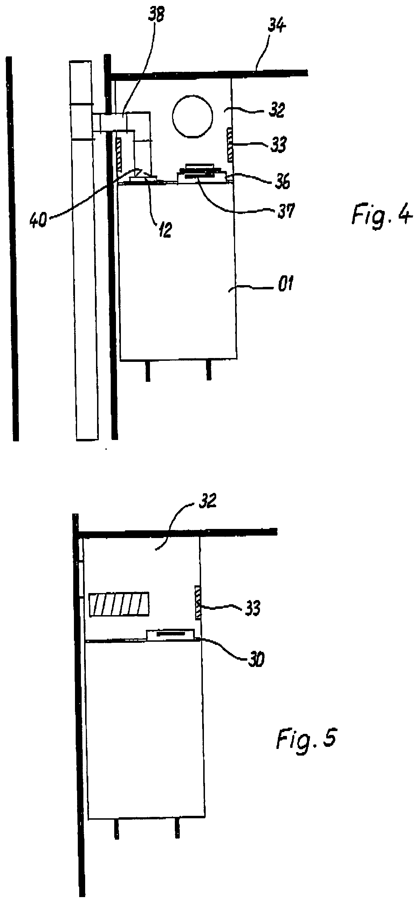

Fig. 4 zeigt einen Schnitt I-I aus Fig. 3. Über einem Deckel 30 der Abluftwärmepumpe 01 ist ein luftdurchlässiger Verteilraum 32 angeordnet. Die Luftdurchlässigkeit des Verteilraumes 32 wird durch im Strömungsquerschnitt veränderliche Öffnungen 33 hergestellt. Der Verteilraum 32 erstreckt sich in einer besonderen Ausführungsform zwischen der Raumdecke 34 und dem Deckelblech 30.

Alternativ dazu kann der Verteilraum 32 als zweigeteiltes Bauteil ausgeführt sein, um eine einfache Montage zu gewährleisten. Die Trennlinie verläuft beispielsweise entlang der Linie 35. Zwischen der Raumdecke 34 und der Begrenzung des Verteilraumes kann ein Dichtelement angeordnet sein. Im Bereich des Abluftstutzens ist eine Ausssparung 36 vorgesehen, die eine Filterschublade 37 zum Luftfilterwechsel freimacht. Das Fortluftrohr 38 verläuft innerhalb des Verteilraums 32 und kann gedämmt ausgestaltet sein, um Kondensatanfall zu verhindern. Das Fortluftrohr 38 kann in einem gemeinsamen Schacht 39 zusammen mit mehreren Ober die einzelnen Stockwerke eines Gebäudes verteilten Abluftgeräten angeordnet sein.

Um eine Rückströmung der Fortluft innerhalb einzelner Geräte untereinander zu verhindern, wird im Fortluftstutzen eine Rückschlagklappe 40 angeordnet.

In einer weiteren besonderen Ausführung ist der Verteilraum 32 zweigeteilt an der Unterseite entlang des Deckelblechs 30 offen und an der Oberseite 34 geschlossen.

Die Abluftwärmepumpe 01 ist über den Verteilraum 32 mit einem gemeinsamen Schacht 39 gekoppelt. In dem Verteilraum 32 sind Öffnungen 33 vorgesehen, welche die Luftdurchlässigkeit des Verteilraums 32 beeinflussen können. Im Bereich des Fortluftstutzens der Abluftwärmepumpe 01 ist eine Rückschlagklappe 40 vorgesehen. Der Abluftstutzen 12 ist über das Fortluftrohr 38 mit dem gemeinsamen Schacht 39 gekoppelt. Im Bereich des Abluftstutzens 11 ist eine herausnehmbare Filterschublade vorgesehen.

Fig. 5 zeigt eine Frontalanicht einer Abluftwärmepumpe gemäß Fig. 3. Wie bereits in Fig, 4 gezeigt, wird der Verteilraum 42 auf der Abluftwärmepumpe 01 befestigt.

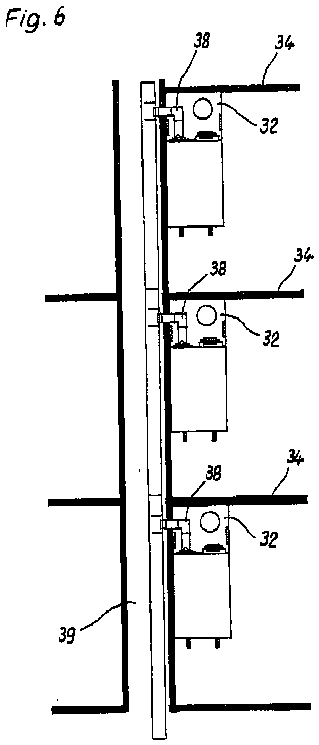

Fig. 6 zeigt eine schematische Darstellung eines Installationsbeispiels. Hierbei werden mehrere Lüftungswärmepumpen in verschiedenen Geschosswohnungen angeordnet, wobei die verschiedenen Lüftungswärmepumpen über einen gemeinsamen Fortluftschacht 39 verfügen.

Durch die Ausgestaltung des Verteilraumes wird die Fortluft in einem abgeschlossenen Rohr im Bereich des Abluftverteilers geführt. Die Abluftöffnungen können an verschiedenen Stellen des Abluftkastens bzw. des Verteilraumes derart angeordnet sein, dass sie entsprechend den jeweiligen Einbauanforderungen beispielsweise herausgebrochen bzw. herausnehmbar ausgestaltet sind.

Durch die Abluftöffnung kann gleichzeitig ein Filterwechsel einer Filterkassette zugängig gemacht werden. Der Abluftkasten bzw. der Verteilraum kann zweiteilig ausgestaltet sein und ist vorzugsweise horizontal auseinandernehmbar, wobei die beiden Halbschalen über Nuten und Feder zusammensteckbar sind. Durch eine unterschiedliche Ausgestaltung des Abluftkastens bzw. des Verteilraumes können verschiedene Einbausituationen berücksichtigt werden. Der Abluftkasten bzw. der Verteilraum kann beispielsweise aus Styropor bestehen und kann nach dem Einbau tapeziert bzw. verputzt werden.

Somit wird ein Abluftkasten mit einem Fortluftanschluss und einem Abluftanschluss vorgesehen, welcher variable Anschlussmöglichkeiten aufweist. Diese Anschlussmöglichkeiten können vorzugsweise heraustrennbar ausgestaltet sein.

Der Abluftkasten kann neben Styropor auch aus Blech, Kunststoff etc. hergestellt werden.

Mit der Wärmepumpe gemäß der Erfindung kann auch die in Feuchträumen erhöhte Anforderung an die installierten Geräte im Hinblick auf den Spritzwasserschutz z.B. IP X4 sichergestellt werden. Somit wird neben der Fortluftführung auch die Abluftführung mit einem Rohr ausgestaltet, damit kein Spritzwasser über den Abluftstutzen in das Gerät gelangt.

## Patentansprüche

1. Wärmepumpenvorrichtung, mit
einer Lüftungswärmepumpe, welche einen Abluftstutzen (11) und einen Fortluftstutzen (12) aufweist, und
einer Luftverteilungseinheit (32), welche an der Lüftungswärmepumpe derart lösbar befestigt werden kann, dass die Abluft durch die Luftverteilungseinheit (32) in den Abluftstutzen (11) geleitet wird,
**dadurch gekennzeichnet, dass** die Fortluft (FL) von dem Fortluftstutzen (12) durch ein Fortluftrohr in der Luftverteilungseinheit (32) geführt wird,
wobei die Luftverteilungseinheit (32) eine Vielzahl von möglichen Abluftöffnungen aufweist, wobei die entsprechende Abluftöffnung durch Herausbrechen oder Herausnehmen ausgewählt werden kann.

2. Wärmepumpenvorrichtung nach Anspruch 1, wobei im Bereich des Fortluftstutzens (12) eine Rückschlagklappe (40) angeordnet ist.

3. Wärmepumpenvorrichtung nach einem der vorherigen Ansprüche, wobei die Luftverteilungseinheit (32) zweiteilig ausgestaltet ist.

4. Wärmepumpenvorrichtung nach einem der vorherigen Ansprüche, wobei im Bereich des Abluftstutzens (11) eine Filtereinheit (37) angeordnet ist.

5. Wärmepumpenvorrichtung nach einem der vorherigen Ansprüche, wobei die Luftverteilungseinheit (32) aus Styropor, Blech oder Kunststoff hergestellt ist.

6. Wärmepumpenvorrichtung nach einem der vorherigen Ansprüche, wobei das Fortluftrohr (38) derart ausgestaltet ist, dass es mit einem zentralen Fortluftschacht (39) gekoppelt werden kann.

## Claims

1. Heat pump equipment, with
a ventilation heat pump which indicates a vent nozzle (11) and an exhaust air nozzle (12) and
an air-distribution unit (32) which can be fixed on the ventilation heat pump in a detachable way, so that the exhaust air is routed through the air-distribution unit (32) into the vent nozzles (11),
**characterized in that** the entrained air (FL) is routed from the exhaust air nozzle (12) through an entrained-air pipe into the air-distribution unit (32),
where the air-distribution unit (32) indicates a great number of possible exhaust-air openings, where the corresponding exhaust-air opening can be selected by breaking out or removing.

2. Heat pump equipment according to Claim 1, where a check valve (40) is arranged in the area of the exhaust air nozzle (12).

3. Heat pump equipment according to one of the previous claims, where the air-distribution unit (32) is two-part designed.

4. Heat pump equipment according to one of the previous claims, where a filter unit (37) is arranged in the area of the vent nozzle (11).

5. Heat pump equipment according to one of the previous claims, where the air-distribution unit (32) is manufactured of styropor, sheet metal or plastic.

6. Heat pump equipment according to one of the previous claims, where the entrained-air pipe (38) is designed in such a way that it can be coupled with a central exhaust air shaft (39).

## Revendications

1. Dispositif de pompe à chaleur comprenant
une pompe à chaleur de ventilation présentant un raccord d'air extrait (11) et un raccord d'air rejeté (12), et
une unité de distribution d'air (32) pouvant être fixée à la pompe à chaleur de ventilation de manière amovible de sorte que l'air extrait est conduit à travers l'unité de distribution d'air (32) dans le raccord d'air extrait (11),
**caractérisé en ce que** l'air rejeté (FL) est conduit par le raccord d'air rejeté (12) à travers un tuyau d'air rejeté dans l'unité de distribution d'air (32),
l'unité de distribution d'air (32) présentant une multitude d'orifices d'évacuation d'air potentiels, l'orifice d'évacuation d'air respectif pouvant être choisi par détachement ou par retrait.

2. Dispositif de pompe à chaleur selon la revendication 1, **caractérisé en ce que** dans la zone du raccord d'air rejeté (12) est disposé un clapet anti-retour (40).

3. Dispositif de pompe à chaleur selon l'une des revendications précédentes, **caractérisé en ce que** l'unité de distribution d'air (32) est conçue en deux parties.

4. Dispositif de pompe à chaleur selon l'une des revendications précédentes, **caractérisé en ce que** dans la zone du raccord d'air extrait (11) est disposé une unité de filtration (37).

5. Dispositif de pompe à chaleur selon l'une des revendications précédentes, **caractérisé en ce que** l'unité de distribution d'air (32) est fabriquée en polystyrène expansé, en tôle ou en plastique.

6. Dispositif de pompe à chaleur selon l'une des revendications précédentes, **caractérisé en ce que** le tuyau d'air rejeté (38) est conçu de manière à pouvoir être couplé avec un puits d'air rejeté central (39).
